# DEMANDE DE BREVET EUROPEEN

(11) **EP 0 723 801 A1**
(43) Date de publication de la demande: **31.07.1996**
(21) Numéro de dépôt: 96420027.3
(22) Date de dépôt: 24.01.1996
(51) Int. Cl.: B01D 53/50

(54) **Procédé de désulfuration des fumées**

(30) Priorité: 24.01.1995 FR 9501001
(71) Demandeur: LAB S.A., F-69003 Lyon (FR)
(72) Inventeur: Vicard, Jean-François, F-69002 Lyon (FR); Gourmelon, Fabrice, F-69003 Lyon (FR)
(74) Mandataire: Monnier, Guy

(57) **Abrégé**

L'invention porte sur un perfectionnement aux procédés d'épuration par voie humide des fumées contenant du dioxyde de soufre. Suivant l'invention ce dioxyde de soufre est capté dans un liquide de lavage acide et est oxydé, notamment en gypse, à l'aide d'un métal de transition. La purge du liquide de lavage nécessaire pour extraire les autres polluants captés en même temps que le dioxyde de soufre est traitée pour substantiellement recycler dans le liquide de lavage le métal de transition.

## Description

### DOMAINE DE L'INVENTION

La présente invention se réfère aux procédés d'épuration par voie humide des fumées contenant du dioxyde de soufre.

### CONTEXTE DE L'INVENTION

De très nombreux procédés ont été proposés dans ce domaine, notamment par voie humide. Dans ces procédés. les fumées contenant du dioxyde de soufre SO₂ sont mises en contact dans un laveur avec un liquide de lavage dans lequel on introduit un agent neutralisant, le plus souvent du calcaire CaCO₃ ou du lait de chaux Ca(OH)₂. Le SO₂ est ainsi capté sous forme de sulfite ou bisulfite qui représentent une forte demande chimique d'oxygène (DCO). Il est donc nécessaire de les oxyder en sulfates. Cette oxydation peut être réalisée à l'extérieur du laveur, mais cela nécessite une installation supplémentaire. L'oxydation dans le laveur lui-même évite une telle installation. mais exige un pH acide pour être efficace et économique, alors que la captation du SO₂ est limitée en pH acide et est favorisée en pH neutre. Pour compenser ces difficultés de nombreux procédés à effets catalytiques ont été proposés, en particulier avec des métaux de transition ayant au moins un état peu oxydé et un état fortement oxydé comme le manganèse ou le fer. De préférence ces catalyseurs sont mis en oeuvre sous une forme soluble dans les conditions du liquide de lavage. Toutefois dans de nombreuses applications d'autres polluants sont captés dans le laveur de désulfuration. Il est aussi souvent plus économique d'adapter les conditions de fonctionnement du laveur de désulfuration pour capter d'autres polluants présents dans les fumées (gaz acides, poussières, métaux lourds, etc. ...) évitant ainsi la mise en oeuvre d'autres équipements d'épuration des fumées. Mais il est alors nécessaire de modifier la déconcentration du liquide de lavage. Non seulement le SO₂ capté est extrait sous forme de cristaux de gypse CaSO₄,2H₂O mais le débit de la purge du liquide de lavage doit être augmenté pour pouvoir extraire non seulement les impuretés apportées par la chaux ou le calcaire. mais aussi les autres polluants captés dans le laveur de désulfuration. Il en résulte une consommation élevée de catalyseur et aussi une perte importante de petits cristaux de gypse, en suspension dans le liquide de lavage : et ceci compromet la "vaccination" visant à faire précipiter le gypse résultant des réactions de désulfuration sur les particules en suspension dans le liquide de lavage et non sur les parois du laveur de désulfuration.

### SOMMAIRE DE L'INVENTION

La présente invention vise à supprimer ces inconvénients et limitations. Pour cela le procédé de désulfuration par voie humide suivant l'invention comporte les étapes suivantes :
a) introduire dans un laveur humide des fumées à épurer et contenant du dioxyde de soufre.
b) mettre en contact dans ledit laveur humide lesdites fumées avec un liquide de lavage,
c) recycler la plus grande partie dudit liquide de lavage en maintenant son pH à une valeur constante, acide. par injection d'alcalins, notamment de calcaire ou de chaux.
d) purger et traiter une petite partie dudit liquide de lavage en élevant son pH pour précipiter sous forme de boues au moins une partie des métaux dissous dans ledit liquide de lavage.
e) recycler dans le liquide de lavage au moins une partie desdites boues.
f) injecter dans ledit liquide de lavage un composé d'un métal de transition. ledit métal de transition étant soluble dans ledit liquide de lavage et étant précipité sous forme de boue lors dudit traitement par élévation de pH de la purge dudit liquide de lavage.

Il est aussi possible suivant l'invention d'extraire une partie des cristaux de gypse. notamment les plus grosses particules. de ladite purge avant ledit traitement par élévation du pH.

L'invention présente ainsi l'avantage de pouvoir réaliser la désulfuration en milieu acide permettant la captation efficace d'autres polluants sans consommation excessive dudit métal de transition utilisé comme catalyseur d'oxydation. Ceci évite les coûts d'installations coûteuses et/ou supplémentaires. De plus il est possible d'extraire séparément d'une part la plus grande partie du gypse résultant de la désulfuration et d'autre part un effluent liquide ainsi qu'un résidu solide contenant les autres polluants captés et les impuretés du calcaire ou du lait de chaux utilisé.

### DESCRIPTION DES VARIANTES PREFEREES

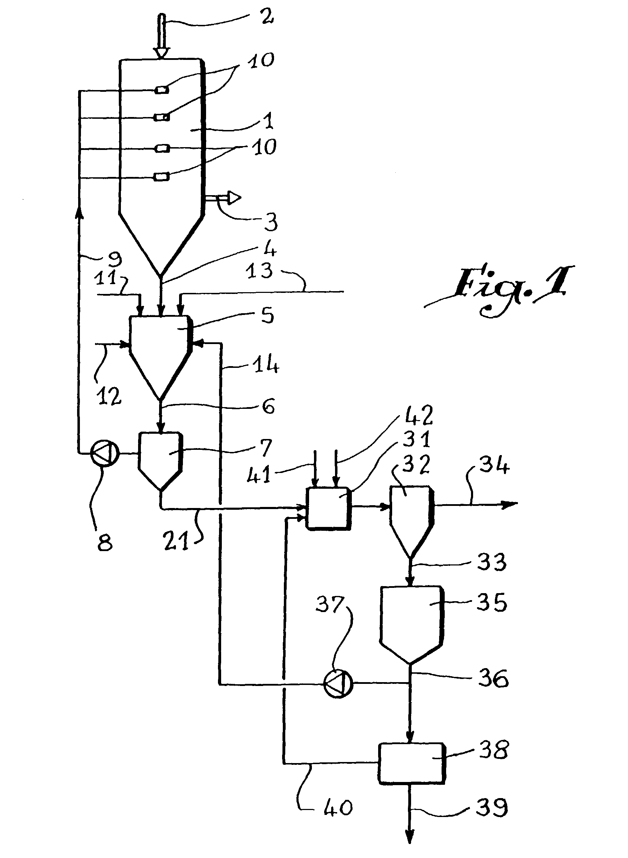

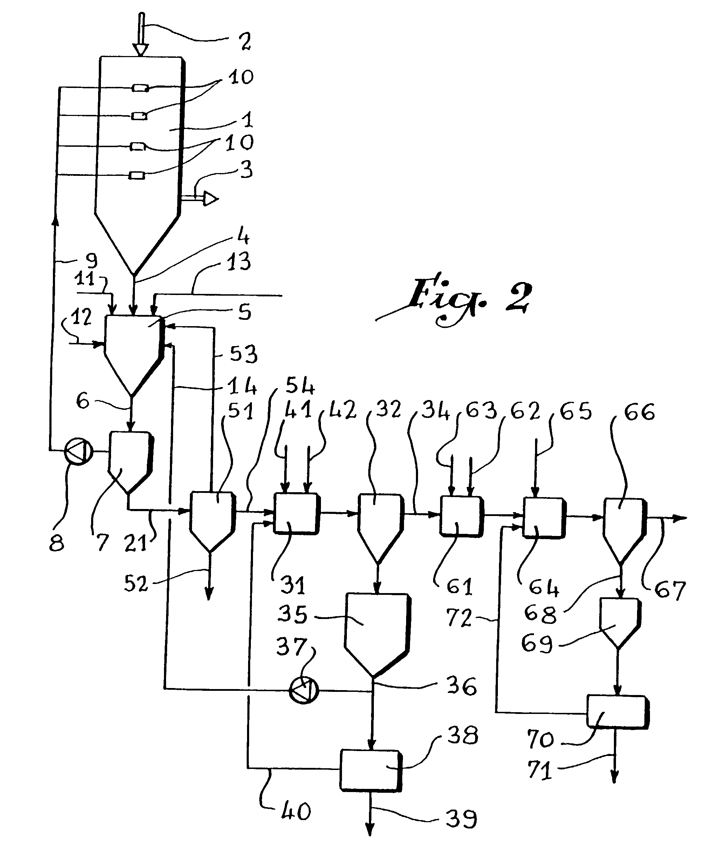

L'invention peut être maintenant décrite et ses avantages mis en évidence au moyen d'exemples à l'aide des figures 1 et 2 qui représentent schématiquement des variantes préférées.

La figure 1 représente un schéma bloc de la variante la plus simple. Le laveur (1) de désulfuration reçoit les fumées à épurer (2) et après traitement les fumées épurées (3) sont envoyées vers une autre installation de traitement ou rejetées à l'atmosphère. Dans le laveur (1) les fumées sont mises en contact avec le liquide de lavage (9) réparti dans les fumées par des dispositifs appropriés (10). Le liquide de lavage après contact avec les fumées est récupéré (4) dans un bac de recyclage (5) qui peut être aménagé dans la base du laveur (1). Une injection (12) d'alcalins, notamment de calcaire ou de lait de chaux, pouvant être combinée avec une injection (non représentée) d'un autre alcalin tel que la soude ou le carbonate de sodium par exemple, est réalisée pour maintenir le pH du liquide de lavage (9) à un pH acide constant sur la base d'une mesure (non représentée) du pH du liquide en un point approprié du circuit de recyclage (4) (5) (6) (7) (8) (9). Un appoint d'eau industrielle (11) maintient le niveau dans le bac de recyclage (5) et compense la purge (21) et l'eau évaporée dans le laveur de désulfuration (1) du fait de la saturation des fumées (2) en vapeur d'eau lors de la mise en contact dans le laveur (1). Le bac de recyclage (5) peut aussi recevoir la purge (13) d'un autre laveur placé en aval du laveur de désulfuration (1) et destiné à abaisser la teneur en dioxyde de soufre des fumées (3) par exemple à l'aide de soude, le SO₂ ainsi capté étant sous forme de sulfite,'bisulfite devant être oxydé.

A la sortie du bac de recyclage le liquide (6) est réparti au moyen d'un dispositif (7) en un débit principal (9) envoyé aux dispositifs de répartition (10) par une pompe de recyclage (8) et un débit secondaire faible (21) de purge. Le dispositif (7) peut être aménagé à la base du bac de recyclage (5) ou implanté en aval de la pompe de recyclage (8). Dans une variante préférée, cette purge est envoyée dans un bac (31) où son pH est augmenté de préférence par une adjonction de lait de chaux (42). Cette augmentation de pH est contrôlée au moyen d'une mesure (non représentée) du pH. Cette augmentation de pH est choisie de manière à précipiter sous forme de boue. le métal de transition choisi comme catalyseur d'oxydation des sulfites/bisulfites en sulfates. Au sens de la présente invention on entend par métal de transition un métal ayant au moins deux états d'oxydation différents par exemple le fer ferreux Fe^{_} et le fer ferrique Fe^{_}. De plus au sens de la présente invention ledit métal de transition est soluble dans le liquide de lavage (9) tandis qu'il est peu soluble au pH maintenu dans le bac (31), pH qui est plus élevé que le pH maintenu dans le liquide de lavage (9). Le bac (31) peut être précédé d'un bac d'oxydation complémentaire (non représenté) par insufflation d'air. Pour faciliter la coagulation des boues formées et leur séparation dans un dispositif de séparation (32), par exemple un décanteur, l'addition (41) de métal de transition est faite dans le bac (31). Cette addition est nécessaire pour maintenir. compte tenu des pertes inévitables. la concentration en métal de transition au niveau requis d'une part pour l'oxydation des sulfites/bisulfites en sulfates dans le liquide de lavage (9) et d'autre part pour assurer la précipitation coagulation décrite ci-avant. Les boues formées (33) sont séparées dans le dispositif (32) du liquide "clair" (34) et sont stockées dans un bac tampon (35) qui est destiné à régulariser la qualité des boues extraites (36) compte tenu des fluctuations devant être prises en compte dans l'installation considérée. Une partie de ces boues (36) est envoyée par une pompe (37) au bac de recyclage (5) à un débit moyen continu ou séquentiel. de préférence constant. La partie restante des boues est déshydratée par exemple dans un filtre presse (38) pour produire un gâteau de filtration (39) et un liquide (40) renvoyé dans le bac (31). La quantité de gâteau (39) est fixée de manière à limiter à la valeur requise la concentration en impuretés du liquide de lavage (9), et se trouvant à l'état de matière en suspension dans les conditions maintenues dans le bac (31). De même le débit de liquide "clair" (34) est fixé de manière à limiter à la valeur requise la concentration en impuretés du liquide de lavage (9) et se trouvant à l'état dissous dans les conditions maintenues dans le bac (31). Ces dispositions permettent de minimiser la consommation de métal de transition et d'autre part de conserver suffisamment de cristaux du gypse pour "vacciner" le liquide de lavage (9) en réinjectant une partie des cristaux de gypse contenus dans la purge (21). Cette variante préférée convient bien au cas où la quantité de SO₂ à capter est faible, tandis qu'une quantité importante de gaz acide est captée en même temps que le SO₂ comme par exemple le HCl qui se trouve sous forme de chlorure de calcium très soluble dans le liquide de lavage (9), dans la purge (21) et dans le bac (31).

Toutefois si la quantité de SO₂ est importante une variante préférée représentée sur la figure 2 comporte une extraction d'une part des matières en suspension, notamment du gypse, de la purge (21) avant l'élévation du pH dans le bac (31). De préférence cette extraction porte sur les cristaux les plus gros. de manière à faciliter l'utilisation du gypse ainsi produit. La figure 2 comporte les mêmes éléments que la figure 1 complétée par les éléments qui vont être décrits maintenant. Il s'agit tout d'abord de l'extraction des matières en suspension, notamment du gypse, dans un dispositif (51), par exemple hydrocyclones, qui reçoit une purge (21) de préférence plus importante que le débit (54) envoyé vers le bac (31). Le débit de liquide de retour (53), de même nature que le liquide (54) est renvoyé au bac de recyclage (5) tandis que les cristaux de gypse extraits. de préférence les plus gros. sont évacués (52) séparément. De manière à réduire l'importance du dispositif (51), le dispositif de répartition (7) peut être aménagé pour répartir les grains les plus gros vers la purge (21) de préférence au liquide de lavage recyclé (9). Dans cette variante préférée, le gypse est extrait séparément. ce qui d'une part facilite son utilisation ultérieure et d'autre part limite la quantité de gâteau (39) et par là la consommation de métal de transition tout en assurant une "vaccination" efficace.

La figure 2 montre aussi un traitement complémentaire du liquide "clair" (34). Dans une variante préférée. de manière à minimiser le gâteau (39) et la consommation de métal de transition. l'augmentation de pH dans le bac (31) est limitée principalement à la précipitation dudit métal de transition. Il est donc nécessaire de poursuivre le traitement de cet effluent (34), ce d'autant plus que la séparation liquide solide dans le dispositif (32) peut être incomplète lorsqu'on se limite à l'utilisation de coagulant qu'est l'injection de métal de transition (41) sans utiliser de floculant organique qui peut provoquer des moussages dans le laveur (1), du fait du recyclage de la boue (14). Ce traitement, en soi connu, comporte un bac de neutralisation floculation (61) avec addition d'alcalin (62) et de floculant (63) puis un bac (64) avec adjonction de coagulant (65) et enfin séparation solide-liquide (66) par exemple dans un décanteur lamellaire qui produit un liquide "clair" conforme aux exigences de rejets et une boue (68) qui est stockée (69) avant déshydratation (70). Il en résulte un gâteau de filtration (71) et un liquide (72) renvoyé au bac (64).

Ainsi le SO₂ capté se retrouve essentiellement dans l'extraction de gypse (52), les impuretés et produits de captation des autres polluants dans l'eau claire (67) (sels neutres CaCl₂, NaCl. etc. ...) dans les gâteaux (39) et (71) en minimisant la consommation de métal de transition et en assurant une vaccination efficace.

Dans une variante préférée, le métal de transition est le fer avec un pH pour le liquide de lavage (9) pouvant être choisi dans la plage 1,0 à 3,0, de préférence entre 1,5 et 1,9. On maintient ainsi dans le laveur de désulfuration (1) des conditions très oxydantes en milieu fortement acide favorable à la captation d'autres polluants. tout en assurant la désulfuration et l'oxydation des sulfites/bisulfites en sulfates. Dans cette variante préférée avec le fer comme métal de transition le pH est augmenté dans le bac (31) jusqu'a une valeur au moins égale à 3,5 et de préférence choisie dans la plage 8 à 8,5 lorsque la quantité de SO₂ captée et donc de gypse n'est pas importante comparée aux résidus solides résultant de la captation des autres polluants.

## Revendications

1. Procédé de désulfuration des fumées par voie humide comportant les étapes suivantes :
a) introduire dans un laveur humide des fumées à épurer et contenant du dioxyde de soufre,
b) mettre en contact dans ledit laveur humide lesdites fumées avec un liquide de lavage,
c) recycler la plus grande partie dudit liquide de lavage en maintenant son pH à une valeur constante, acide, par injection d'alcalins, notamment de calcaire ou de chaux,
d) purger et traiter une petite partie dudit liquide de lavage en élevant son pH pour précipiter sous forme de boues au moins une partie des métaux dissous dans ledit liquide de lavage,
e) recycler dans le liquide de lavage au moins une partie desdites boues,
f) injecter dans ledit liquide de lavage un composé d'un métal de transition, ledit métal de transition étant soluble dans ledit liquide de lavage et étant précipité sous forme de boue lors dudit traitement par élévation de pH de la purge dudit liquide de lavage.

2. Procédé suivant la revendication 1, caractérisé en ce qu'on injecte dans ledit liquide de lavage la purge d'un laveur complémentaire installé en aval dudit laveur humide de fumées et abaissant la teneur en dioxyde de soufre des fumées à l'aide d'alcalins, notamment de soude.

3. Procédé suivant L'une des revendications 1 ou 2, caractérisé en ce que, préalablement au dit traitement de la purge dudit liquide de lavage, une partie des solides en suspension. notamment des cristaux de gypse, est extraite de ladite purge à l'aide d'un dispositif d'extraction approprié.

4. Procédé suivant l'une des revendications 1, 2 ou 3, caractérisé en ce que ladite injection d'un composé dudit métal de transition est au moins suffisante pour, sans adjonction de floculant organique, précipiter substantiellement ledit métal de transition sous forme de boues lors dudit traitement de la purge dudit liquide de lavage pour élévation du pH.

5. Procédé suivant l'une des revendications 1, 2, 3 ou 4, caractérisé en ce que les boues obtenues lors dudit traitement de la purge dudit liquide de lavage par élévation de pH sont envoyées dans un bac tampon, préalablement à leur recyclage dans ledit liquide de lavage, ledit bac tampon ayant une capacité suffisante pour régulariser la qualité des boues extraites.

6. Procédé suivant l'une des revendications 1, 2, 3, 4 ou 5, caractérisé en ce que ladite injection d'un composé d'un métal de transition est faite dans ledit liquide de lavage de manière indirecte soit par mélange avec ladite injection contenant principalement du calcaire ou de la chaux, soit dans la purge dudit liquide de lavage avant élévation de pH, soit dans la purge dudit liquide de lavage après élévation de pH, soit dans ladite partie des boues recyclées dans ledit liquide de lavage, soit dans l'appoint d'eau industrielle, soit dans ladite purge du laveur complémentaire, soit dans ledit liquide de retour dudit dispositif d'extraction du gypse.

7. Procédé suivant l'une des revendications 1, 2, 3, 4, 5 ou 6, caractérisé en ce que le métal de transition choisi est le fer et que le pH dudit liquide de lavage est maintenu constant à une valeur choisi dans la plage 1,0 à 3,0.

8. Procédé suivant la revendication 7 caractérisé en ce que le pH dudit liquide de lavage est maintenu constant à une valeur choisie dans la plage 1,5 à 1,9.

9. Procédé suivant l'une des revendications 7 ou 8, caractérisé en ce que lors dudit traitement de la purge dudit liquide de lavage, le pH est à une valeur supérieure à 3,5.

10. Procédé suivant la revendication 9, caractérisé en ce que ledit pH est augmenté jusqu'à une valeur choisie dans la plage 8,0 à 8,5.
